Europäisches Patentamt

European Patent Office

Office européen des brevets

(11) Publication number: **0 198 894**
**B1**

# EUROPEAN PATENT SPECIFICATION

(45) Date of publication of patent specification: **04.01.89**

(21) Application number: **85905365.4**

(22) Date of filing: **17.10.85**

(86) International application number:
**PCT/US85/02032**

(87) International publication number:
**WO 86/02767 09.05.86 Gazette 86/10**

(51) Int. Cl.⁴: **G 11 B 7/00, G 11 B 20/18,
G 11 B 7/08, G 11 B 20/10,
G 11 B 7/135**

(54) **OPTICAL DATA READER.**

(30) Priority: **29.10.84 US 666021**

(43) Date of publication of application:
**29.10.86 Bulletin 86/44**

(45) Publication of the grant of the patent:
**04.01.89 Bulletin 89/01**

(84) Designated Contracting States:
**DE FR GB**

(56) References cited:
**DE-A-2 634 234
DE-B-1 254 386
DE-C- 702 967
FR-A-2 149 654
GB-A-2 126 406
GB-A-2 138 620
US-A-3 958 229**

(73) Proprietor: **NCR Corporation
World Headquarters
Dayton, Ohio 45479 (US)**

(72) Inventor: **BARNES, Ronald, Leigh
1350 Fieldcrest Road
Wichita, KS 67209 (US)**

(74) Representative: **Robinson, Robert George
International Patent Department NCR Limited
206 Marylebone Road
London NW1 6LY (GB)**

Courier Press, Leamington Spa, England.

## Description

### Technical field

The present invention relates to an optical data reader and, more particularly, to a laser system for reading data recorded on optical media such as a rotatable disk.

### Background art

Optical disks are manufactured in multiple layers with the layer containing the recording medium protected by a transparent layer or thin film. Under conditions of normal usage, the surface of the transparent layer accumulates dirt particles, which particles, to an optical read system, reflect light similar to the recorded data. When such a disk is used in a computer or other sensitized data system, errors are introduced. A number of techniques can be used to remove the accumulated dust particles and/or to prevent their accumulation on the surface of the disk. All of these methods require elaborate precautions. Short focal-length lenses having an extremely limited depth of field tend to focus solely upon the data plane containing the data and obscure (disfocus) particles which appear in other planes. A disadvantage of such a system is the relatively high cost for the lensing and the power requirements for the laser to properly illuminate the data.

GB—A—2138620 and GB—A—2126406 disclose an optical data reader which uses two different laser beams, the one used for reading data on the disk in transmission the other used for reading the same data in reflection, so as to distinguish between data bits and surface irregularities on the basis of comparison of the reflected and transmitted beams.

### Disclosure of the invention

It is an object of the invention to provide a relatively inexpensive optical readout system wherein slight imperfections such as dust and particle accumulations on the surface of the optical disk would not affect data readout.

Thus, according to the invention, there is provided an optical data reader for use in conjunction with a record member on which data is stored in the form of reflective and non-reflective areas contained under a transparent layer, said reader including a combination of generating means for generating a plurality of light beams converging from different directions on said record member to illuminate a same area corresponding to one unit of data; a plurality of light detectors each associated with a corresponding light beam, for detecting reflections of the corresponding light beam; and logic means coupled to each of said plurality of detectors for providing an output when all of said plurality of detectors are detecting reflections so as to eliminate the effects of random surface irregularities of the transparent layer.

According to another aspect of the invention, there is provided an optical data reader for use in conjunction with a record member on which data is stored in the form of transparent and non-transparent areas contained under a transparent layer, said reader including a combination of generating means for generating a plurality of light beams converging from different directions on said record member; a plurality of light detectors each positioned to receive the light from an individual light beam which passes through a same transparent area of said record member; and logic means coupled to each of said plurality of light detectors for providing an output when all of the light beams pass through a transparent area so as to eliminate the effects of random surface irregularities of the transparent layer.

### Brief description of the drawings

Embodiments of the invention will now be described by way of example, with reference to the accompanying drawings, in which:

Figure 1 is a schematic diagram illustrating one embodiment of the present invention; ·

Figure 2 is a group of waveforms illustrating the operating signals associated with the embodiment of Figure 1;

Figure 3 is a schematic diagram illustrating a second embodiment of the invention; and

Figure 4 is a schematic diagram illustrating a third embodiment of the invention.

### Best mode for carrying out the invention

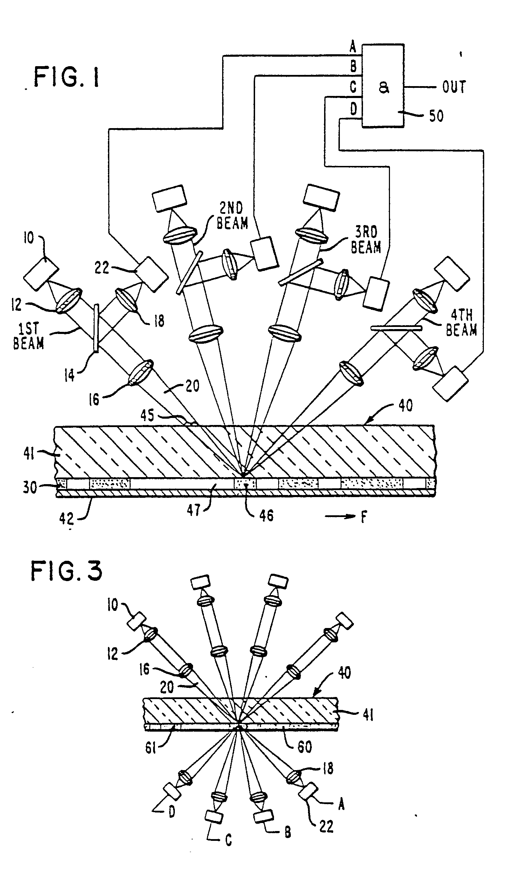

Figure 1 illustrates a plurality of semiconductor lasers 10. Each laser is angularly positioned so as to direct a beam of light 20 onto a recording layer 30. The recording layer is one component of an optical data recording member 40 which in the preferred embodiment is an optical disk. The recording member 40 is comprised of a glass layer 41 which is both transparent and optically homogeneous and has highly parallel and flat surfaces. The recording layer 30 may be a light-absorbing sub-oxide of metal or semi-metal. A protective film 42 is deposited on the recording layer 30 to protect the recording layer from damage. The beam 20, emanating from the laser 10, is directed to a first lens 12 and from the first lens to a one-half silvered mirror 14. The beam traverses the mirror to a second lens 16 and is focused on the recording layer 30. A third lens 18 is positioned, with regards to the one-half silvered mirror 14, so as to receive reflected light from the recording layer. A semi-conductor light detector 22 is positioned to detect the image formed by lens 18. Each of the remaining laser beam-generating systems shown is identical in construction to the one just described. The output signal provided by each of the light detectors, labeled A, B, C and D, is directed as inputs to an AND gate 50. The AND gate 50 provides an output when all of its inputs are of a high level.

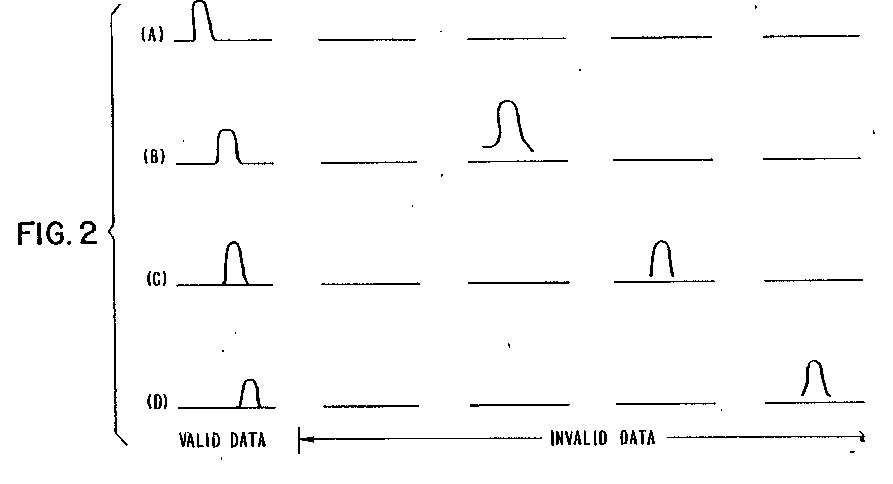

The recording layer 30 is conditioned such that data is represented by the reflectance or lack of reflectance from the layer. The shaded areas 47 signify light-absorbing portions and the non-shaded areas signify light-reflective portions. Referring now to Figure 2 in conjunction with Figure 1, in operation, as the optical recording medium moves in the direction indicated by the direction arrow F, the optical beams will be reflected by the areas 46 or absorbed by the areas 47. The output of each of the detectors labeled A through D in Figure 2 are illustrated as positive-going waveforms when the beams reflect from the area 46. In all other instances, the waveform will remain low and relatively flat. An imperfection such as a particle of dust and/or fingerprint, shown as a dark projection 45 on the surface of the glass substrate 41 may cause a reflection in the absence of a reflective area 46. For the position of the recording member 40 shown in Figure 1, the output signal A, although caused by the dust spot, is substantially similar to the signals B, C and D, caused by a true reflection from area 46. The presence of a positive pulse from all detectors indicates that the light beams are focused on, and are, in fact, reflecting from, a true reflective area 46. As the recording member continues on in direction F, a light absorbing area 47 will come into the focal point of the beams. As the dust particle 45 moves between the first beam and the second beam, the detector outputs will remain flat because the beams will be focused on the light-absorbing film 47. When the dust spot is in the second beam, the output signal B from the detector will go high, but the other detectors, not reflecting the light beam, will remain low. In a similar fashion, as the recording member 40 continues to move forward the dust spot is positioned in the third beam, and the output signal C from the detector will go high. A like response will be obtained as evidenced by the output signal D, when the dust spot enters the fourth beam. The AND gate 50 detecting, in the second instance, no positive pulses will result in outputting a low-level signal. Similarly, for the conditions of positioning the spot in the third and fourth beams, all of the outputs are not at the high level; therefore, the presence of the reflective particle on the surface of the optical data recording member will be ignored by the AND gate 50. Obviously, if the contaminate on the surface of the glass layer 41 covers an area which encompasses all of the light beam impinging points, an erroneous indication will be outputted. The likelihood of such a large contaminate appearing on the surface is quite remote and, as such, the system of the present invention eliminates all of the problems associated with prior art systems while permitting the use of relatively inexpensive long focal-length lenses and low power laser sources.

Although four laser beam systems are shown in the preferred embodiment of the invention, it would be obvious to a person skilled in the art that more or less units could be used with increasing and/or decreasing resolution of the dust problem.

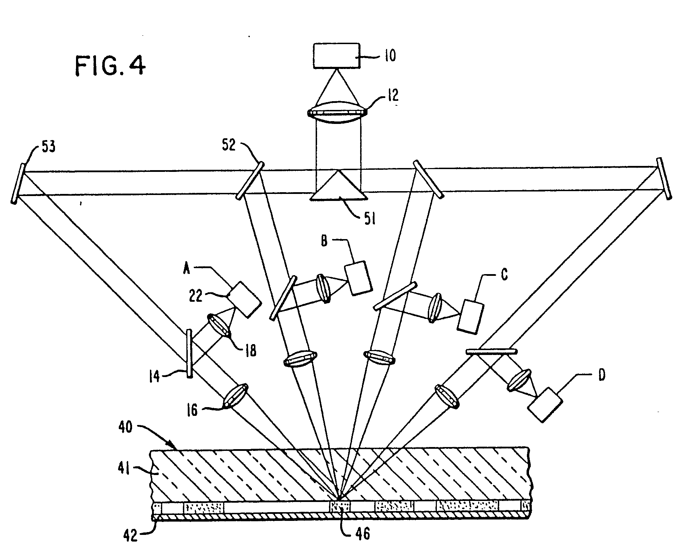

Referring to Figure 3, wherein a second embodiment of the invention is shown: the recording member 40 is modified such that the glass layer 41 supports the data layer, which consists of transparent areas 61 and non-transparent areas 60. The lenses 18 are positioned on the side of the recording member opposite the semiconductor lasers 10, lens 12 and lens 16. The operation of the second embodiment is identical to that of the first embodiment with the exception that the 1/2 reflective mirrors are not required.

Referring to Figure 4, wherein a third embodiment of the invention is shown: a single semiconductor laser 10 is shown with its output directed through lens 12 to a fully reflecting 90° prism 51. The prism 51 splits the impinging laser beam into two equal beams and directs the beams to 1/2 reflective mirrors 52 and to the fully reflective mirrors 53. The beams reflected from mirrors 52 and 53 then are directed through the remainder of the system which corresponds to the system shown and described in conjunction with Figure 1.

**Claims**

1. An optical data reader for use in conjunction with a record member (40) on which data is stored in the form of reflective (46) and non-reflective (47) areas contained under a transparent layer, said reader including a combination of generating means (10) for generating a plurality of light beams (20) converging from different directions on said record member (40) to illuminate a same area corresponding to one unit of data; a plurality of light detectors (22) each associated with a corresponding light beam (20), for detecting reflections of the corresponding light beam (20); and logic means (50) coupled to each of said plurality of detectors (22) for providing an output when all of said plurality of detectors (22) are detecting reflections so as to eliminate the effects of random surface irregularities of the transparent layer.

2. An optical data reader for use in conjunction with a record member (40) on which data is stored in the form of transparent (61) and non-transparent (60) areas contained under a transparent layer, said reader including a combination of generating means (10) for generating a plurality of light beams (20) converging from different directions on said record member (40); a plurality of light detectors (22) each positioned to receive the light from an individual light beam (20) which passes through a same transparent area (61) of said record member (40); and logic means (50) coupled to each of said plurality of light detectors (22) for providing an output when all of the light beams pass through a transparent area (61) so as to eliminate the effects of random surface irregularities of the transparent layer.

3. An optical reader according to either claim 1 or 2, wherein said generating means (10) includes a plurality of focused beam-generating means each generating a beam (20) of light directed onto a point on said record member (40).

4. An optical reader according to either claim 1 or 2, wherein said generating means (10) includes a semiconductor laser for emitting a laser beam;

and a lens system (51, 52, 53) for splitting the laser beam into a plurality of beams (20) convergent on said record member (40).

5. An optical reader according to claim 1, including a plurality of reflector means (14) for directing reflected light from the illuminated area to an associated light detector (22).

6. An optical reader according to claim 1, wherein said record member (40) is arranged to move with respect to said light beams (20) to cause a sequential scanning of the stored data and in that said light beams (20) are aligned in a plane parallel with the direction of motion of the record member (40).

7. An optical reader according to claim 1, including a plurality of lens means (16) interposed in each generated beam of light (20) for focusing and converging said beam to illuminate an area on said record member (40).

8. An optical reader according to either claim 1 or 2, wherein said record member (40) is an optical disk.

**Patentansprüche**

1. Optischer Datenleser zur Verwendung in Verbindung mit einem Aufzeichnungselement (40), auf dem Daten in der Form von unter einer transparenten Schicht befindlichen reflektierenden (46) und nichtreflektierenden (47) Bereichen gespeichert sind, wobei der Leser aufweist eine Kombination aus einer Erzeugungsvorrichtung (10) zum Erzeugen einer Vielzahl von Lichtstrahlen (20), die auf dem Aufzeichnungselement (40) von Verschiedenen Richtungen konvergieren, um einen selben Bereich entsprechend einer Dateneinheit zu beleuchten; einer Vielzahl von Lichtdetektoren (22), die jeweils einem entsprechenden Lichtstrahl (20) zugeordnet sind zum Detektieren von Reflexionen des entsprechenden Lichtstrahls (20); und einer logischen Vorrichtung (50), die mit jedem der Vielzahl von Detektoren (22) gekoppelt ist zum Abgeben eines Ausgangssignals, wenn alle der Vielzahl von Detektoren (22) Reflexionen detektieren, um die Wirkung der fufälligen Oberflächenunregelmässigkeiten der transparenten Schicht fur eliminieren.

2. Optischer Datenleser zur Verwendung in Verbindung mit einem Aufzeichnungselement (40), auf dem Daten in der Form von unter einer transparenten Schicht befindlichen transparenten (61) und nichttransparenten (60) Bereichen gespeichert sind, wobei der Leser aufweist eine Kombination aus einer Erzeugungsvorrichtung (10) für eine Vielzahl von Lichtstrahlen (20), die auf dem Aufzeichnungselement (40) von verschiedenen Richtungen konvergieren; einer Vielzahl von Lichtdetektoren (22), die jeweils angeordnet sind, um Licht von einem selben einzelnen Lichtstrahl (20) zu empfangen, der durch einen transparenten Bereich (61) des Aufzeichnungselements (40) hindurchläuft; und eine logische Vorrichtung (50), die mit jedem der Vielzahl von Lichtdetektoren (22) gekoppelt ist, um ein Ausgangssignal abzugeben, wenn alle Lichtstrahlen durch einen transparenten Bereich (61) hindurchlaufen, die Wirkung der fufälligen Oberflächenunregelmässigkeiten der transparenten Schicht fur eliminieren.

3. Optischer Leser nach Anspruch 1 oder 2, wobei die Erzeugungsvorrichtung (10) eine Vielzahl von fokussierten Strahlerzeugungsvorrichtungen aufweist, von denen jede einen Strahl (20) von Licht erzeugt, das auf einen Punkt auf dem Aufzeichnungselement (40) gerichtet wird.

4. Optischer Leser nach Anspruch 1 oder 2, wobei die Erzeugungsvorrichtung (10) einen Halbleiterlaser zum Aussenden eines Laserstrahles und ein Linsensystem (51, 52, 53) zum Aufteilen des Laserstrahles in eine Vielzahl von Strahlen (20) aufweist, die auf dem Aufzeichnungselement (40) konvergieren.

5. Optischer Leser nach Anspruch 1, bestehend aus einer Vielzahl von Reflektorvorrichtungen (14) zum Richten von dem beleuchteten Bereich reflektierten Licht auf einen zugeordneten Lichtdetektor (22).

6. Optischer Leser nach Anspruch 1, wobei, das Aufzeichnungselement (40) angeordnet ist, um sich bezüglich der Lichtstrahlen (20) zu bewegen, um ein sequentielles Abstasten der gespeicherten Daten zu bewirken, und daß die Lichtstrahlen (20) in einer Ebene parallel zur Bewegungsrichtung des Aufzeichnungselements (40) ausgerichtet sind.

7. Optischer Leser nach Anspruch 1, bestehend aus einer Vielzahl von Linsenvorrichtungen (16), die in jedem erzeugten Lichtstrahl (20) zum Fokussieren und Konvergieren des Lichtstrahls eingefügt sind, um einen Bereich auf dem Aufzeichnungselement (40) zu beleuchten.

8. Optischer Leser nach Anspruch 1 oder 2, wobei das Aufzeichnungselement (40) eine optische Schneibe ist.

**Revendications**

1. Lecteur optique de données à utiliser conjointement avec un élément d'enregistrement (40) sur lequel des données sont mémorisées sous la forme de zones réfléchissantes (46) et non réfléchissantes (47) contenues au dessous d'une couche transparente, le lecteur comprenant une combinaison de moyens de génération (10) destinés à générer plusieurs faisceaux lumineux (20) convergeant des directions différentes sur ledit élément d'enregistrement (40) afin d'éclairer une même zone correspondant à une unité de données; plusieurs détecteurs de lumière (22) chacun associé à un faisceau lumineux correspondant (20) et destiné à détecter des réflexions du faisceau lumineux correspondant (20); et des moyens logiques (50) couplés à chacun desdits détecteurs (22) afin de produire un signal de sortie lorsque la totalité desdits détecteurs (22) détectent des réflexions, afin d'éliminer les effets d'irrégularités superficielles au hasard de la couche transparente.

2. Lecteur optique de données à utiliser conjointement avec un élément d'enregistrement (40) sur lequel des données sont mémorisées sous la forme de zones transparentes (61) et non transparentés (60) contenues au dessous d'une couche transparente, le lecteur comprenant une combinaison de moyens de génération (10) destinés à générer plusieurs faisceaux lumineux (20) convergeant des directions différentes sur ledit élément d'enregistrement (40); plusieurs détecteurs de lumière (22), chacun positionné pour recevoir la lumière provenant d'un faiceau lumineux individuel (20) qui passe à travers une même zone transparente (61) dudit élément d'enregistrement (40); et des moyens logiques (50) couplés à chacun desdits détecteurs de lumière (22) afin de produire un signal de sortie lorsque la totalité des faisceaux lumineux passe à travers une zone transparent (61), afin d'éliminer les effets d'irrégularités superficielles au hasard de la couche transparente.

3. Lecteur optique selon l'une des revendications 1 ou 2, dans lequel lesdits moyens de génération (10) comprennent plusieurs moyens de génération de faisceaux focalisés générant chacun un faisceau (20) de lumière dirigé sur un point dudit élément d'enregistrement (40).

4. Lecteur optique selon l'une des revendications 1 ou 2, dans lequel lesdits moyens de génération (10) comprennent un laser à semiconducteur destiné à émettre un faisceau laser; et un système de lentilles (51, 52, 53) destiné à diviser le faisceau laser en plusieurs faisceaux (20) convergeant sur ledit élément d'enregistrement (40).

5. Lecteur optique selon la revendication 1, comprenant plusieurs moyens réflecteurs (14) destinés à diriger la lumière réfléchie provenant de la zone éclairée vers un détecteur de lumière associé (22).

6. Lecteur optique selon la revendication 1, dans lequel ledit élément d'enregistrement (40) est agencé pour se déplacer par rapport auxdits faisceaux lumineux (20) afin de provoquer un balayage séquentiel des données mémorisées, et en ce que lesdits faisceaux lumineux (20) sont alignés dans un plan parallèle à la direction du mouvement de l'élément d'enregistrement (40).

7. Lecteur optique selon la revendication 1, comprenant par plusieurs moyens à lentilles (16) interposés dans chaque faisceau généré de lumière (20) afin de focaliser et de faire converger ledit faisceau pour éclairer une zone dudit élément d'enregistrement (40).

8. Lecteur optique selon l'une des revendications 1 ou 2, dans lequel ledit élément d'enregistrement (40) est un disque optique.

# FIG. 1

# FIG. 3

FIG. 2

(A)

(B)

(C)

(D)

VALID DATA |← ———————————— INVALID DATA ————————————→

EP 0 198 894 B1

FIG. 4